# EUROPEAN PATENT APPLICATION

(11) **EP 4 191 177 A1**
(43) Date of publication of application: **07.06.2023**
(21) Application number: 21211667.7
(22) Date of filing: 01.12.2021
(51) Int. Cl.: F25J 1/02, F25J 1/00, F17C 9/04

(54) **LNG EXERGY OPTIMIZATION FOR SBCC**

(71) Applicant: NEDERLANDSE ORGANISATIE VOOR TOEGEPAST- NATUURWETENSCHAPPELIJK ONDERZOEK TNO, 2595 DA 's-Gravenhage (NL)
(72) Inventor: ROS, Jasper Alexander, 2595 DA 's-Gravenhage (NL); GOETHEER, Earl Lawrence Vincent, 2595 DA 's-Gravenhage (NL)
(74) Representative: V.O.

(57) **Abstract**

The invention is directed to a carbon capture and liquefication system comprising a liquified natural gas (LNG) exergy recovery section. The invention is more specifically directed to such a system to liquify carbon dioxide (CO₂) gas from a CO₂ containing gas, more particularly from an exhaust gas from a means of maritime transportation. The invention is further directed to a method for recovery of exergy using the exergy recovery section, a means of maritime transportation comprising the system, and the use of such a system for liquefaction of carbon dioxide gas.

## Description

The invention is directed to a carbon capture and liquefication system comprising a liquified natural gas exergy recovery section. The invention is more specifically directed to such a system to liquify carbon dioxide (CO₂) gas from a CO₂ containing gas, more particularly from an exhaust gas from a means of maritime transportation. The invention is further directed to a method for recovery of exergy using the exergy recovery section, a means of maritime transportation comprising the system, and the use of such a system for liquefaction of carbon dioxide gas.

The amount of CO₂ emission has significantly increased in the past decades due to *i.a.* industrial processes that burn fossil fuels. The increasing amount is considered to be one of the major causes for climate change. The maritime sector is responsible for roughly 3% of the worldwide CO₂ emission. Therefore, the International Maritime Organization (IMO) has set greenhouse gas reduction goals that should minimalize the emission by the maritime sector by at least 50% by 2050 compared to 1990. To achieve these goals, various solutions have been suggested. Such solutions include *i.a.* changing the fuel, the speed, or using different sails to minimize head wind.

One type of fuel that is seen as a promising alternative for petroleum-based fuels or heavy oil fuels is LNG. Nowadays, there are roughly 200 large ships that use LNG as a fuel source. This number is expected to increase over the coming years. However, carbon dioxide is still a component in the exhaust gas from LNG. Typically, such exhaust gasses include 3-5% CO₂, with the remaining components including water, nitrogen, oxygen, and some minor impurities.

LNG is a liquid mixture that mainly comprises methane (*i.e.* more than 90%). Other constituents may include nitrogen, propane and ethane. It is typically stored at around -162 °C at ambient pressures (approximately 1 bar).

A solution to further reduce carbon dioxide emission from ships, is to use ship-based carbon capture (SBCC) for capture of the carbon dioxide gas from the exhaust gas integrated with exergy recovery from the LNG for liquefaction of the captured carbon dioxide gas. This is, for instance, described by Ros *et al.* (*GHGT-15*, 15-18 March 2021, Abu Dhabi, UAE), who further describe that SBCC could play a large role in reducing the carbon dioxide emission on short term. SBCC entails implementing LNG fueled vessels with CO₂ capture, liquefaction, and on-board storage of liquified CO₂. For instance, the vessel may comprise a CO₂ capture system that allows for the absorption of CO₂ from the exhaust gas from the vessel, followed by production of a CO₂ rich gas. Then, the carbon dioxide in the CO₂ rich gas may be liquified and stored on board. LNG exergy may be recovered as heat by the vaporization of LNG which in turn can be used to liquify CO₂ gas. In other words, such a system can utilize the exergy recovery from LNG in CO₂ capture. Herein, exergy is a term used to describe the amount of useful work that may be obtained from a system, by letting it come to a thermodynamic equilibrium with its environment. Due to the very low temperature of LNG compared to ambient temperatures (about -162 °C vs. approximately 20 °C), the exergy recovery potential is very high.

The drawback of the system disclosed in the aforementioned publication of Ros *et al.*, is that the heat that is obtained by LNG vaporization is only sufficient for the liquefaction of around 60-80% of the CO₂ present in the exhaust gas. As CO₂ capture systems can generally capture around 90% of the CO₂ in flue gases or higher, the CO₂ capture efficiency is thus limited to the vaporization energy availability. To further increase the capture efficiency, additional refrigeration equipment may be installed to supply the extra additional energy, but this is typically very capital intensive and increases the operational costs of the system.

Exergy recovery systems for LNG are also described in CN103075250, WO2020180015 and by Dorosz et al. (Entropy, 2018, 20, 59). In these systems, additional electricity is generated, which is the main working principle behind them. However, the heat that is required to vaporize LNG is added to the system in the form of cooling water of steam.

It is an object of the present inventors to provide a system based on exergy recovery from LNG that allows for an increased overall CO₂ capture efficiency. The present inventors found that this can surprisingly be achieved by improving the exergy recovery from LNG.
Figure 1 illustrates a preferred embodiment of the system according to the present invention.
Figure 2 illustrates a preferred embodiment of the system according to the present invention comprising a heat exchanging section.
Figure 3 illustrates the results of a theoretical proof of principle experiment preformed in Aspen Plus^{®} Software.
Figure 4 illustrates the theoretically calculated net electricity generation.
Figure 5 illustrates the theoretically calculated net heat demand.

In a first aspect, the invention is directed to a carbon capture and liquefaction system (1) comprising:
(a) a CO₂ capture system (100) adapted to during use provide a CO₂ rich gas stream (101);
(b) a CO₂ liquefaction section (200) adapted to during use liquify at least part of the CO₂ rich gas stream (101) to provide a liquified CO₂ stream (201); and
(c) a liquefied natural gas (LNG) exergy recovery section (300) for recovering exergy from LNG.

The LNG exergy recovery system comprises an LNG tank (2) adapted to during use contain LNG. The fuel tank comprises an LNG stream outlet (21) for an LNG stream (301) such that it can be in fluid connection to the rest of the LNG exergy recovery system. Suitable fuel tanks are commercially available and are typically adapted to store LNG at a temperature between -170 and -155 °C, such as at -162 °C at atmospheric pressures (approximately 1 bar) or higher pressures, such as roughly 2 or 3 bar.

The exergy recovery section further comprises a pressurizer section (3) adapted to during use pressurize the LNG stream (301), to obtain a pressurized LNG stream (302). The pressurizer section comprises an LNG stream inlet (31) and a pressurized LNG stream outlet (32). In a typically embodiment, the pressurizer section (3) is adapted to during use pressurize the LNG stream to a pressure between 5-40 bar, preferably between 6-30 bar, more preferably between 7-20 bar. The pressurizer is typically a fluid pump.

Further, the exergy recovery section comprises a vaporizer section (4) adapted to during use vaporize the pressurized LNG stream (302) to obtain a pressurized natural gas (NG) stream (401), wherein the vaporizer section comprises a pressurized LNG stream inlet (41) and a pressurized NG stream outlet (42). The vaporizing section may comprise one or more vaporizing devices to recover at least part of the exergy from the LNG. The type of vaporizer devices used in the vaporizer section is not particularly limited. Suitable vaporizer devices for instance use the ambient environment as a heat source. Particular types of suitable vaporizer devices may include plate heat exchangers and shell and tube heat exchangers. Preferably, the vaporizer section (4) is adapted to during use adjust the pressurized natural gas stream to a temperature between -70 and -10 °C, preferably between -65 and -15 °C, most preferably between -60 and -20 °C. This temperature is typically dependent on the pressure of the CO₂ rich gas stream because the pressurized LNG stream, during use, exchanges heat with the CO₂ rich gas stream to obtain the pressurized NG stream and because liquefying CO₂ at higher pressures takes less cold than liquefying CO₂ at lower pressures (*vide infra*).

The exergy recovery section further comprises a turbine section (5) that is adapted to during use depressurize the pressurized NG stream (401) in order to obtain a depressurized NG stream (501). It was found that depressurizing the NG stream may favorably result in generated electricity that can for instance be put to use in other parts of the system. Moreover, the present inventors advantageously found that depressurizing the NG stream allows for additional exergy recovery in a preferably present further section of the system (*i.e.* the heat exchange section). This further section can be connected to the turbine section via a depressurized NG stream outlet (52) of the turbine section.

The turbine can be fed with pressurized NG via a pressurized NG stream inlet (51). As described herein-above, the turbine section is most preferably adapted to generate electricity during its use. Advantageously, the electricity that may be obtained from the turbine during use, is more than consumed in the pressurizer section during use. The generated electricity may be used in other parts of the system, for instance in the CO₂ capture system (100), the CO₂ liquefaction section (200) and/or the pressurizer section (3). Accordingly, the turbine section may be electrically connected to the CO₂ capture system (100), the CO₂ liquefaction section (200) and/or the pressurizer section (3). It may be appreciated that these electrical connections may in practice be carried out by connecting the various sections to an electricity grid.

From the above, it may thus be understood that the LNG stream outlet (21) is in fluid connection to the LNG stream inlet (31), the pressurized LNG stream outlet (32) is in fluid connection to the pressurized LNG inlet (41), and the pressurized NG outlet (42) is in fluid connection to the pressurized NG inlet (51).

In the system of the invention, the CO₂ liquefaction section (200) is in thermal connection to the vaporizer section (4), such that during use, heat (*i.e.* negative heat, also referred to as cold) can be transferred from the pressurized LNG stream (302) to the CO₂ rich gas stream (101). This heat transfer can facilitate the decrease of the temperature of the CO₂ rich gas stream and generally even facilitate the liquefaction of at least part of the CO₂ rich gas stream to obtain the cooled or even liquified CO₂ stream (201).

The CO₂ capture system (100) is not particularly limited. The system may be based on conventional carbon dioxide capture systems, which are typically commercially available. The principle behind such commercial CO₂ capture systems is described in *i.a.* US1783901. It typically comprises feeding a carbon dioxide containing gas to an absorber comprising an alkaline solvent, such as an amine-based solvent. The CO₂ may be absorbed by the solvent, leaving a CO₂ lean gas that can exit the absorber. The CO₂ rich liquid stream (*i.e.* solvent with absorbed CO₂) is then typically fed to a regenerator, wherein the solvent is regenerated and gaseous CO₂ is released by desorbing the carbon dioxide from the solvent. This thus provides a CO₂ rich gas stream. Accordingly, typically, the CO₂ capture system (100) comprises an absorber section that during use absorbs CO₂ from a CO₂ containing gas, to provide a CO₂ rich liquid fraction. The CO₂ capture system further typically comprises a regenerator section that during use provides the CO₂ rich gas stream (101) from the CO₂ rich fraction. The CO₂ rich gas stream may be further processed in *i.a.* the CO₂ liquefaction section.

The present inventors realized that the carbon dioxide containing gas that may be fed to the CO₂ capture system can be from a means of transportation. Preferably, the carbon dioxide containing gas is an exhaust gas from a means of maritime transportation. Any means of maritime transportation may suffice, as long as its main fuel is LNG. Examples thereof can include cruise ships, crane ships, dredgers and cargo-ships. These are typically large enough to facilitate the system according to the present invention on board. The invention is therefore also directed to a means of maritime transportation comprising the system for carbon capture and liquefaction.

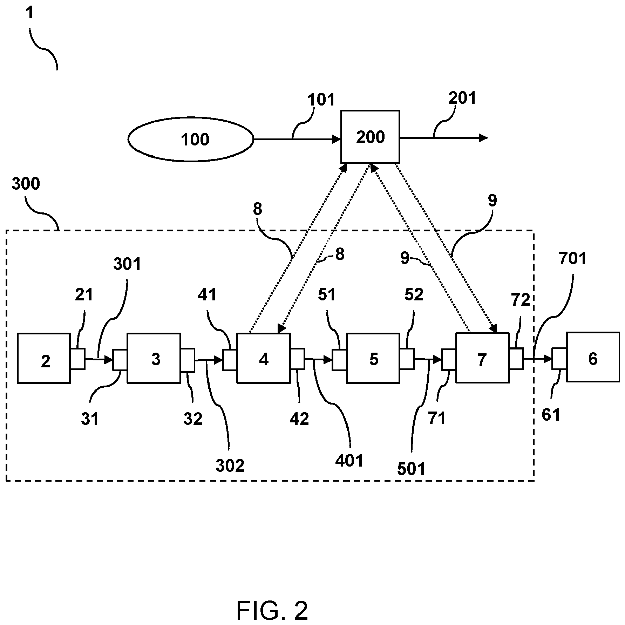

The amount of negative heat (*i.e.* cold) that is required to liquify CO₂ gas, depends on the pressure to which the gas is pressurized. For instance, liquefying CO₂ at 20 bar takes substantially less cold than liquefying CO₂ at 7 bar. Therefore, the amount of exergy that needs to be recovered from the LNG to liquify all CO₂ in the CO₂ rich gas stream, depends on the desired final pressure of the liquified CO₂. In typical embodiments of the present invention, the CO₂ is liquified at a pressure for which exergy recovery by only the vaporizing section is insufficient. In those embodiments, additional exergy is preferably recovered from the depressurized NG stream obtained from the turbine section. Advantageously, depressurizing the NG stream in the turbine leads to a decrease of the temperature of the NG stream, e.g. to a temperature between -140 and -50 °C, as described in more detail below. This decrease in temperature allows for additional exergy to be recoverable from the NG in the form of negative heat (*i.e.* cold). Transferring this cold to the CO₂ rich gas stream may thus further facilitate liquefaction of this stream. Accordingly, the exergy recovery section preferably also comprises a heat exchanging section (7) as illustrated in Figure 2, to during use provide a heated NG stream (701). The heat exchanging section comprises a depressurized NG inlet (71) and a heated NG outlet (72). The depressurized NG inlet is in fluid connection to the depressurized NG outlet (52). The type of heat exchanger is not particularly limited. Suitable heat-exchanger include shell and tube heat exchangers and plate-frame heat exchangers.

The heat exchanging section (7) can be thermally connected to the CO₂ liquefaction section (200). This thermal connection allows for heat to be transferred from the CO₂ rich gas stream to the depressurized NG stream (501). In this way, at least part of the CO₂ rich gas stream can be cooled, preferably liquified to obtain a liquid CO₂ stream (201).

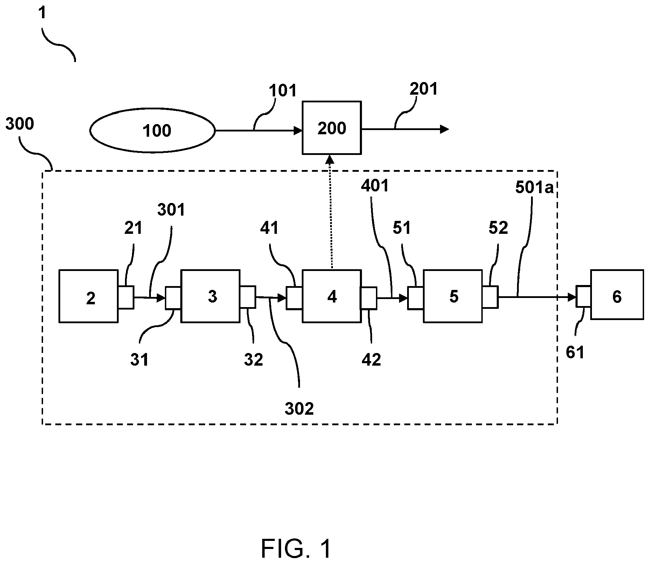

The system may further comprise an engine section (6) adapted to during use consume NG, introduced into the engine section via a NG stream inlet (61), as illustrated in Figures 1 and 2.

It may be appreciated that each of the systems and sections described herein may comprise one or more units, devices, components etc. that are together capable of realizing the function of the respective system and section. Moreover, each of the systems and sections may comprise one or more units, devices, components etc. such as valves, fluid pumps, pipes, vessels etc. to assist is carrying out said task. In particular, the liquefaction section may comprise one or more separate units to actuate the liquefaction of the CO₂. In addition, the section can comprise one or more compressor units, that allow for increasing the pressure of the CO₂ rich gas stream which is generally required for liquefaction of CO₂. The vaporizer section and/or the heat exchanging section may each be individually thermally connected to one or more units of the CO₂ liquefaction section. The heat exchange of the LNG streams and/or NG streams with the CO₂ gas stream can be achieved with or without the assistance of a heat transfer fluid (HTF). Preferably, the thermal connection is at least partially provided by the HTF. Suitable HTFs include ammonia (NH₃) or a water/glycol mixture. Preferably, the HTF is ammonia as this typically allows for an optimal heat transfer and because ammonia may be liquid (and not solid) at the low temperatures of the LNG streams and/or NG streams. As illustrated in Figure 2, the system accordingly preferably comprises one or more heat transfer fluid circuits (8,9), adapted to during use conduit the HTF. The HTF circuits preferably provide at least part of the thermal connection between the vaporizer section (4) and the CO₂ liquefaction section and/or between the heat exchanging section (7) and the CO₂ liquefaction section. The HTF therefore may serve as an intermediate heat carrier that can transfer the heat from the CO₂ rich gas stream to the pressurized LNG stream and/or the depressurized NG stream.

A further aspect of the invention is directed to a method for recovering LNG exergy with an exergy recovery section (300). This exergy recovery system can be part of the carbon capture and liquefaction system (1) as described herein, or it can be provided separately to provide the heat useful for the liquefaction of a CO₂ gas stream that is obtained offsite. For instance, one or more carbon capture plants and one or more LNG combustion engines may be separately operated and/or separately positioned in a (onshore) region such as on a large (onshore) industrial site. In such cases, it is possible to place the exergy recovery section before the LNG combustion engine, to separately recover the LNG exergy and to use the recovered exergy to liquify CO₂ at a different location or lead CO₂ gas from a different location to the exergy recovery section coupled to a CO₂ liquefaction section.

Accordingly, the method of the present invention comprises providing the exergy recovery system (300) and
- providing the LNG tank (2) with LNG;
- leading a LNG stream (301) to the pressurizer section (3) to obtain a pressurized LNG stream (302);
- leading the pressurized LNG stream (302) to the vaporizer section (4) to obtain a pressurized NG stream (401);
- leading the pressurized NG stream (401) to the turbine section (5) to obtain a depressurized NG stream (501);
- optionally leading the depressurized NG stream (501) to a heat exchanging section (7) to obtain a heated NG stream (701). The method further comprises exchanging heat of a CO₂ rich gas stream (101) with the pressurized LNG stream (302)).

The LNG provided in the LNG tank typically has a pressure of less than 5 bar such as about 2 bar and a temperature between -165 and - 160 °C, such as approximately -162 °C. In the pressurizing section, the pressure of the LNG stream is preferably increased to a pressure between 5-40 bar. A high pressure is typically preferred, as this may contribute to a higher efficiency of the turbine section. Additionally, a higher pressure typically results in a lower temperature of the depressurized NG gas stream obtained after the turbine section, which in turn may result in a higher exergy recovery, because the temperature difference between the depressurized NG stream and the environment is larger for a lower temperature of the depressurized NG stream. This exergy can be used for CO₂ liquefaction, for instance by using the optional heat exchanging section. Accordingly, the pressure is preferably adjusted to a pressure of more than 7 bar, such as between 6-30 bar, more preferably between 7-20 bar. It was found that a pressure of at least 8 bar, resulted in enough exergy recovery to capture and liquefy up to 100% of the CO₂ from LNG exhaust gases, from a CO₂ liquefaction perspective, such as exhaust gases from means of maritime transportation.

Additionally, a high-pressure stream enables more electricity to be generated in the turbine. For example, leading the pressurized NG stream having a pressure of about 8 bar through the turbine section can provide around 25% of the electricity required for a CO₂ capture and liquefaction system, if present. Therefore, the present invention can be advantageously used to minimize carbon dioxide emission into the environment, as well as to provide additional electricity. It may be noted that the preferred pressure may be determined by balancing several factors, such as, the required electricity to achieve the pressure and the final profit from the efficiency of the turbine section. For instance, the electricity required to provide a pressurized LNG stream in the pressurizer section may be enough for high pressures, while the efficiency of the turbine section is not enough to balance this required electricity.

The pressurized LNG stream is led from pressurizer section to the vaporizer section (4), to increase the temperature such that a pressurized NG stream (401) is obtained. The pressurized LNG stream may have a temperature between -165 and -160 °C, such as approximately -162 °C. The temperature of the pressurized NG stream may between -70 and -10 °C, preferably between -65 and -15 °C, most preferably between -60 and -20 °C. As detailed above, the temperature is typically dependent on the pressure and accordingly the liquefaction temperature of the CO₂ rich gas stream. The temperature, together with the high pressures of the pressurized NG stream, allow for optimization of the turbine efficiency.

The pressurized NG stream (401) is led to the turbine section (5) for the pressure to reduce and to obtain a depressurized NG stream (501).

Reducing the pressure of a gas in a given volume results in the expansion of the gas and concomitantly in a temperature reduction of the gas. Depending on the temperature of the depressurized NG stream, it may be directly used in an engine or combustion reactor, or it may first be led to the optional heat exchanging section (7). For instance, if the temperature is around 0 °C, the depressurized NG gas stream may directly be led to the engine section.

If the temperature of the depressurized NG stream (501) is sufficiently low, additional exergy may be recovered in the heat exchanging section (7) by exchanging heat of this stream with the CO₂ rich gas stream (101) in the heat exchanging section (7). For example, if the temperature of the depressurized NG stream has a temperature between -140 and -50 °C, preferably between -140 and -70 °C, most preferably between -140 and -100 °C, exergy can still efficiently be recovered. The heat exchange results in a heated NG stream (701) that has a temperature suitable for the desired application (*e.g*. the engine section).

Preferably, exchanging heat of the CO₂ rich gas stream with the pressurized LNG stream and/or depressurized NG stream is carried out with an HTF, which preferably comprises ammonia. Using ammonia as HTF can result in a heated NG stream (701) that has a temperature that may be too low for direct use in an application. The temperature may be between - 23 and -18 °C, such as approximately -20 °C. Accordingly, one or more additional heat exchanging units may be present in the heat exchanging section.

If the depressurized or heated NG stream is led to the engine section, exhaust gases are produced. The exhaust gases typically have a temperature above 100 °C, such as at least 200 °C or at least 350 °C. The heat from the exhaust gases may also be extracted by a heat exchanger. The energy therefrom, may for instance be used in the CO₂ capture system. After the heat exchanger, the exhaust gas may have a temperature of approximately 135 °C.

Preferably, the method is carried out on board of a maritime transportation means. Accordingly, the CO₂ rich gas stream (101) is preferably obtained from an at least partially purified LNG exhaust gas from a means of maritime transportation. The LNG exhaust gas can for instance be at least partially purified in a CO₂ capture system of the carbon capture and liquefaction system (1), as described herein above. Typically, at least 70%, preferably at least 80%, more preferably at least 90%, most preferably at least 99% of the total amount of the exhaust gas is at least partially purified. Favorably, approximately all of the exhaust gas is led to the CO₂ capture system, minimizing the emission to the environment.

With the system and/or method according to the present invention, the CO₂ emission to the environment can be reduced with a significant amount. As an additional bonus, there is also additional electricity provided that can be used for a variety of applications, such as for the CO₂ capture system.

For the purpose of clarity and a concise description, features are described herein as part of the same or separate embodiments, however, it will be appreciated that the scope of the invention may include embodiments having combinations of all or some of the features described.

The invention may further be illustrated by the following nonlimiting examples.

### Example 1 - Proof of concept

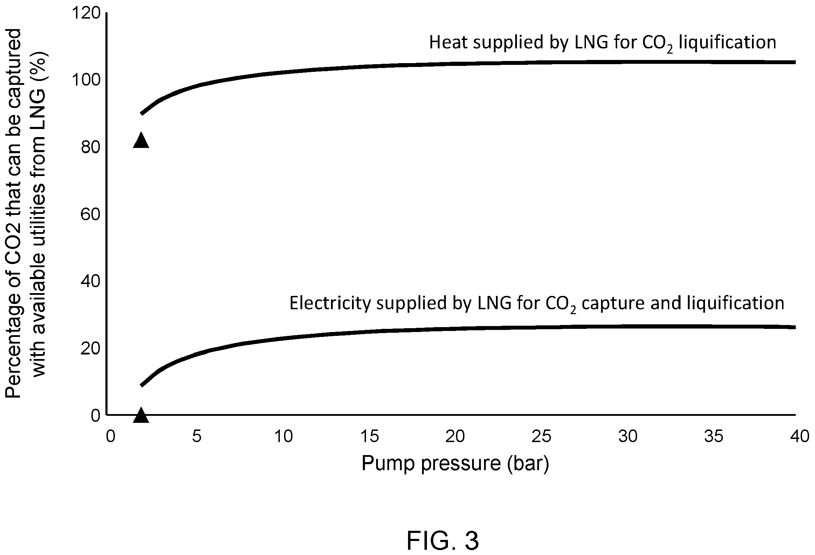

A proof of principle *in silico* experiment was done in Aspen Plus^{®} Software. The results are presented in Figure 3.

The triangles represent a comparative example, wherein the turbine and heat exchanging section are not present. As can be seen, the lower triangle representing the electricity supplied by LNG for CO₂ capture and liquefaction, is at 0 %. The upper triangle, representing the heat supplied by LNG for CO₂ liquefaction is at approximately 80%.

The results further show that for a system according to the present invention, at a pressure of 8 bar or higher, 100% of the CO₂ present in the gas can be liquified with the available (negative) heat in the LNG. Approximately 25% of the electricity needed for a CO₂ capture system is also provided.

### Example 2 - Net electricity generation

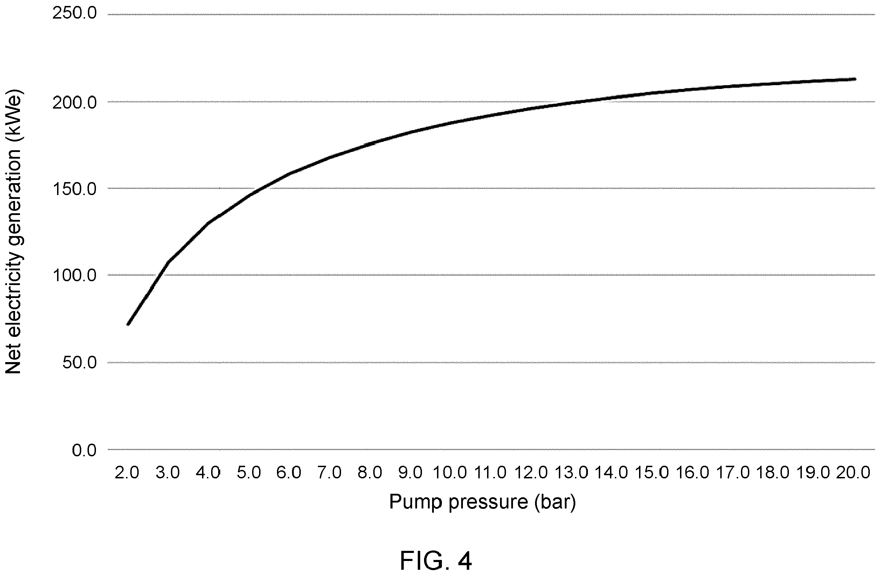

An *in silico* experiment was carried out with an LNG flow of 1 kg/s. Herein the net electricity generation (*i.e.* generated electricity by the turbine section minus the required electricity for the pressurizer section) was determined based upon the pump outlet pressure (*i.e.* the pressure of the pressurized LNG stream). The results thereof are illustrated in Figure 4 for pressures up to 20 bar. As can be seen, with increasing pump outlet pressure, the net electricity generation is increased.

### Example 3 - Net heat demand

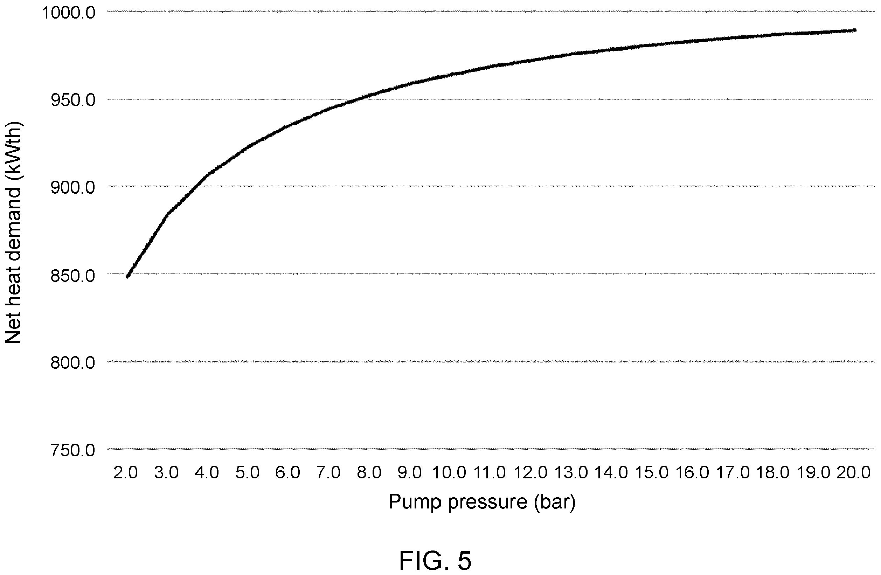

An *in silico* experiment was carried out with an LNG flow of 1 kg/s. The net heat demand (*i.e.* the heat demand for the vaporizer section + the heat demand for the heat exchanging section) was determined based upon the pump outlet pressure. Heat demand is herein used to describe the negative heat released from the LNG. The results thereof are illustrated in Figure 5 for pressures up to 20 bar. An increasing pump outlet pressure accordingly results in a higher net heat demand.

## Claims

1. Carbon capture and liquefaction system (1) comprising
(a) a CO₂ capture system (100) adapted to during use provide a CO₂ rich gas stream (101);
(b) a CO₂ liquefaction section (200) adapted to during use liquify at least part of said CO₂ rich gas stream (101) to provide a liquified CO₂ stream (201); and
(c) a liquefied natural gas (LNG) exergy recovery section (300) for recovering exergy from LNG, said LNG recovery section comprising:
- an LNG tank (2) adapted to during use contain LNG, said LNG tank comprising an LNG stream outlet (21) for an LNG stream (301);
- a pressurizer section (3) adapted to during use pressurize the LNG stream (301) to obtain an pressurized LNG stream (302), said pressurizer section comprising an LNG stream inlet (31) and a pressurized LNG stream outlet (32);
- a vaporizer section (4) adapted to during use vaporize the pressurized LNG stream (302) to obtain a pressurized natural gas (NG) stream (401), said vaporizer section comprising a pressurized LNG stream inlet (41) and a pressurized NG stream outlet (42);
- a turbine section (5) adapted to during use depressurize the pressurized NG stream (401) to obtain a depressurized NG stream (501), said turbine section comprising a pressurized NG stream inlet (51) and a depressurized NG stream outlet (52);
wherein the LNG stream outlet (21) is in fluid connection to the LNG stream inlet (31), the pressurized LNG stream outlet (32) is in fluid connection to the pressurized LNG inlet (41), the pressurized NG outlet (42) is in fluid connection to the pressurized NG inlet (51);
wherein said CO₂ liquefaction section (200) is in thermal connection to the vaporizer section (4), such that during use heat can be transferred from the pressurized LNG stream (302) to the CO₂ rich gas stream.

2. System according to the previous claim, wherein said LNG exergy recovery section further comprises a heat exchanging section (7) to during use provide a heated NG stream (701), said heat exchanging section comprising a depressurized NG inlet (71) and a heated NG outlet (72), wherein the depressurized NG inlet (71) is in fluid connection to the depressurized NG outlet (52).

3. System according to the previous claim, wherein the heat exchanging section (7) is thermally connected to the CO₂ liquefaction section (200), such that during use heat can be transferred from the depressurized NG stream (501) to the CO₂ rich gas stream (101).

4. System according to any of the previous claims, wherein the system further comprises one or more heat transfer fluid (HTF) circuits (8,9) adapted to during use conduit an HTF, wherein the HTF circuits provide at least part of the thermal connection between the vaporizer section (4) and the CO₂ liquefaction section (200) and/or between the heat exchanging section (7) and the CO₂ liquefaction section (200).

5. System according to any of the previous claims, wherein the pressurizer section (3) is adapted to during use pressurize the LNG stream to a pressure between 5-40 bar, preferably between 6-30 bar, more preferably between 7-20 bar.

6. System according to any of the previous claims, wherein the vaporizer section (4) is adapted to, during use, adjust the pressurized natural gas stream to a temperature between -70 and -10 °C, preferably between -65 and -15 °C, most preferably between -60 and -20 °C.

7. System according to any of the previous claims, wherein said turbine section is adapted to, during use, generate electricity and wherein said turbine section is electrically connected to said pressurizer section and/or the CO₂ capture system.

8. Method for recovering exergy from LNG in an exergy recovery section (300) according to any of the previous claims, wherein the method comprises
- providing the LNG tank (2) with LNG;
- leading an LNG stream (301) to the pressurizer section (3) to obtain a pressurized LNG stream (302);
- leading the pressurized LNG stream (302) to the vaporizer section (4) to obtain a pressurized NG stream (401);
- leading the pressurized NG stream (401) to the turbine section (5) to obtain a depressurized NG stream (501);
- optionally leading the depressurized NG stream (501) to a heat exchanging section (7) to obtain a heated NG stream (701);
wherein the method further comprises exchanging heat of a CO₂ rich gas stream (101) and the pressurized LNG stream (302).

9. Method according to the previous claim, wherein the method further comprises exchanging heat of the CO₂ rich gas stream (101) with the depressurized NG stream (501)), preferably wherein the exchanging heat of the CO₂ rich gas stream with the pressurized LNG stream (302) and/or the depressurized NG stream (501) is carried out with an HTF, preferably wherein the HTF is ammonia.

10. Method according to any of the previous claims 8-9, wherein the temperature of the depressurized NG stream (501) is between -140 and -50 °C, preferably between -140 and -70 °C, most preferably between -140 and - 100 °C.

11. Method according to any of the previous claims 8-10, wherein the pressure of the pressurized LNG stream (302) is between 5-40 bar, preferably 6-30 bar, more preferably 7-20 bar.

12. Method according to any of the previous claims 8-11, wherein the CO₂ rich gas stream (101) is obtained from an at least partially purified LNG exhaust gas from a means of maritime transportation, wherein at least 70%, preferably at least 80%, more preferably at least 90%, most preferably at least 99% of the total amount of the exhaust gas is at least partially purified.

13. Means of maritime transportation comprising the system (1) according to any of the claims 1-7.

14. Use of the system (1) according to any of the claims 1-7 for liquefaction of CO₂ gas to obtain CO₂ liquid from a CO₂ containing gas.
